(19) Europäisches Patentamt
European Patent Office
Office européen des brevets

(11) **EP 4 738 244 A1**

(12) **EUROPEAN PATENT APPLICATION**

(43) Date of publication:
06.05.2026 Bulletin 2026/19

(21) Application number: 25212022.5

(22) Date of filing: 29.10.2025

(51) International Patent Classification (IPC):
*G06T 5/60* (2024.01)

(52) Cooperative Patent Classification (CPC):
**G06T 5/60;** G06T 2207/10016; G06T 2207/20081;
G06T 2207/20084

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: 29.10.2024 US 202418930706

(71) Applicant: Robert Bosch GmbH
70442 Stuttgart (DE)

(72) Inventors:
• **PEREIRA, Marcus A.**
**Baltimore, MD, 21218 (US)**
• **LI, Henry Fangyi**
**Cambridge, MA, 02139 (US)**
• **LIN, Wan-Yi**
**Wexford, PA, 15090 (US)**

(74) Representative: **Isarpatent**
**Patent- und Rechtsanwälte PartG mbB
Friedrichstraße 31
80801 München (DE)**

(54) **DIFFUSION OPTIMAL CONTROL FOR INVERSE PROBLEMS**

(57) A method for image generation utilizing a diffusion process with optimal control is disclosed. Optimal control is applied in an inverse diffusion problem to mitigate processing costs associated with image generation. The method includes an outer loop performed for a predetermined number of iterations, with two inner loops (a back propagation loop and a forward propagation loop) that calculate, over a number of time steps, the desired image from a beginning state (e.g., static noise or a measurement) after completion of the predetermined number of iterations.

FIG. 1

EP 4 738 244 A1

**Description**

TECHNICAL FIELD

The present disclosure relates to solving inverse problems for applications such as control signal generation and image generation, and more particularly, to incorporating optimal control into diffusion algorithms for generating control signals and/or images.

BACKGROUND

Diffusion models are a class of generative models that are used for various applications such as image generation. A diffusion model may implement a two-phase process that includes a forward diffusion process and a reverse, or inverse diffusion process. The forward diffusion process may gradually add noise to the data, while the reverse diffusion process may remove the noise to reconstruct the original data (e.g., image).

In a forward diffusion process, data points may be progressively transformed into noise by gradually or iteratively adding small amounts of Gaussian noise. The forward process may corrupt the data into a noisy distribution that may be mathematically modeled by, e.g., a Gaussian distribution.

The inverse diffusion process begins from a sample of pure noise, the data is de-noised in a step-by-step manner. As the data is de-noised, the data is reconstructed. This may be carried out by predicting the noise that was added at each step and subtracting the predicted noise.

SUMMARY

A method for image generation utilizing a diffusion process with optimal control is disclosed. In various embodiments, the disclosed method uses optimal control in an inverse diffusion problem to mitigate processing costs associated with image generation. The method includes an outer loop performed for a number of iterations, with two inner loops (a back propagation loop and a forward propagation loop) that calculate, over a number of time steps, the desired image from a beginning state (e.g., static noise or a measurement).

BRIEF DESCRIPTION OF THE DRAWINGS

FIG. 1 shows a system 100 for training a neural network.

FIG. 2 shows a computer-implemented method 200 for training a neural network.

FIGS. 3A and 3B graphically illustrate the methodology of the present disclosure.

FIGS. 4A-4C illustrate examples of image generation of the present disclosure relative to other methods.

FIG. 5 depicts a schematic diagram of an interaction between computer-controlled machine 510 and control system 512.

FIG. 6 depicts a schematic diagram of the control system of FIG. 1 configured to control a manufacturing machine, such as a punch cutter, a cutter or a gun drill, of manufacturing system, such as part of a production line.

FIG. 7 depicts a schematic diagram of the control system of FIG. 1 configured to control an automated personal assistant.

FIG. 8 depicts a schematic diagram of the control system of FIG. 1 configured to control a monitoring system, such as a control access system or a surveillance system.

FIG. 9 depicts a schematic diagram of the control system of FIG. 1 configured to control an imaging system, for example an MM apparatus, x-ray imaging apparatus or ultrasonic apparatus.

DETAILED DESCRIPTION

Embodiments of the present disclosure are described herein. It is to be understood, however, that the disclosed embodiments are merely examples and other embodiments can take various and alternative forms. The figures are not necessarily to scale; some features could be exaggerated or minimized to show details of particular components. Therefore, specific structural and functional details disclosed herein are not to be interpreted as limiting, but merely as a representative bases for teaching one skilled in the art to variously employ the embodiments. As those of ordinary skill in the art will understand, various features illustrated and described with reference to any one of the figures can be combined with features illustrated in one or more other figures to produce embodiments that are not explicitly illustrated or described. The combinations of features illustrated provide representative embodiments for typical application. Various combinations and modifications of the features consistent with the teachings of this disclosure, however, could be desired for particular applications or implementations.

"A", "an", and "the" as used herein refers to both singular and plural referents unless the context clearly dictates otherwise. By way of example, "a processor" programmed to perform various functions refers to one processor programmed to perform each and every function, or more than one processor collectively programmed to perform each of the various functions.

Diffusion models have been shown to be adept at conditional generation tasks in part due to their iterative sampling algorithm, which allows the dynamics of an uncontrolled prior score function $\nabla_x \log p_t(x)$ to be directed towards an arbitrary posterior distribution by introducing an additive guidance term $\mathbf{u}$. When this guidance term is the conditional score $\nabla_{\mathbf{x}} \log p_t(\mathbf{y}|\mathbf{x})$, the resulting sample is provably drawn from the desired conditional distribution $p(\mathbf{x}|\mathbf{y})$. A central obstacle to this framework is the general difficulty of obtaining the conditional score function $\nabla_{\mathbf{x}} \log p_t(\mathbf{y}|\mathbf{x}_t)$ due to its dependence on the *noisy* diffusion variate $\mathbf{x}_t$ rather than just the final sample $\mathbf{x}_0$. In large-scale conditional generation tasks such as class- or text-conditional sampling the computational overhead of training a time-dependent conditional score function from scratch is deemed acceptable. However, this solution is not acceptable in inverse problems where the goal is to design a generalized solver that will work in a zero-shot capacity for an arbitrary forward model.

This bottleneck has spawned a flurry of recent research dedicated to approximating the conditional score $\nabla_{\mathbf{x}} \log p_t(\mathbf{y}|\mathbf{x}_t)$ as a simple function of the *noiseless* likelihood $\log p(\mathbf{y}|\mathbf{x}_0)$. However, these approximations impose a significant cost to the performance of the resulting algorithm.

The present disclosure makes use of the insight that optimal control theory can be incorporated to mitigate some of the costs discussed above. Accordingly, various methods of solving a diffusion problem for image generation incorporate a framework built from optimal control theory where such approximations are no longer necessary. By framing the reverse diffusion process as an optimal control problem, the inverse problem solver may be detached from the strict requirements of the conditional sampling equation given by while still leveraging the prior of the unconditional diffusion process.

Optimal control is a class of algorithms from robotics wherein the goal is to minimize a user-defined cost (or energy) function that describes the task to be performed, with respect to a trajectory of controls subject to the dynamics of the system (e.g., the system could be a robot or an arbitrary autonomous agent. In the present disclosure, optimal control is applied to the inverse problem, which is a class of problems where the goal is to recover a hidden or unknown variable $x_0$ using only (potentially) noisy measurements y. More particularly, the optimal control is applied to a diffusion model. Diffusion models are a class of deep generative models that leverage the function-approximation capabilities of deep neural networks to learn the score function (mathematically represented by $\nabla_{x_t} \log p(x_t)$) which provides the direction in which the likelihood of the data is the highest (i.e., the gradient of the data distribution). Once trained, the score function can be used to sample (i.e., to "generate" samples, even novel ones) from the learned data distribution. Details and examples of this methodology are discussed in further detail below.

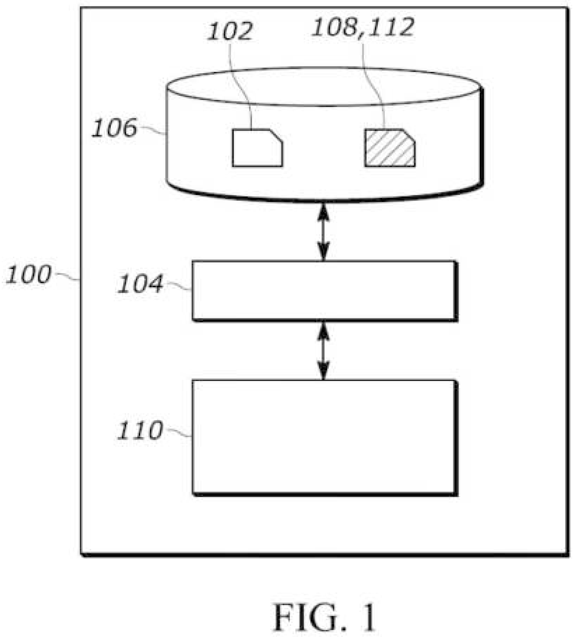

FIG. 1 shows a system 100 for training a neural network, e.g., a deep neural network. The neural network or deep neural networks shown and described are merely examples of the types of machine learning networks or neural networks that can be used. The system 100 may comprise an input interface for accessing training data 102 for the neural network. For example, as illustrated in FIG. 1, the input interface may be constituted by a data storage interface 104 which may access the training data 102 from a data storage 106. For example, the data storage interface 104 may be a memory interface or a persistent storage interface, e.g., a hard disk or an SSD interface, but also a personal, local or wide area network interface such as a Bluetooth, Zigbee or Wi-Fi interface or an Ethernet or fiber optic interface. The data storage 106 may be an internal data storage of the system 100, such as a hard drive or SSD, but also an external data storage, e.g., a network-accessible data storage.

In some embodiments, the data storage 106 may further comprise a data representation 108 of an untrained version of the neural network which may be accessed by the system 100 from the data storage 106. It will be appreciated, however, that the training data 102 and the data representation 108 of the untrained neural network may also each be accessed from a different data storage, e.g., via a different subsystem of the data storage interface 104. Each subsystem may be of a type as is described above for the data storage interface 104. In other embodiments, the data representation 108 of the untrained neural network may be internally generated by the system 100 on the basis of design parameters for the neural network, and therefore may not explicitly be stored on the data storage 106.

The system 100 may further comprise a processor subsystem 110 which may be configured to, during operation of the system 100, provide an iterative function as a substitute for a stack of layers of the neural network to be trained. Here, respective layers of the stack of layers being substituted may have mutually shared weights and may receive as input an output of a previous layer, or for a first layer of the stack of layers, an initial activation, and a part of the input of the stack of layers. The processor subsystem 110 may be further configured to iteratively train the neural network using the training data 102. Here, an iteration of the training by the processor subsystem 110 may comprise a forward propagation part and a backward propagation part. The processor subsystem 110 may be configured to perform the forward propagation part by, amongst other operations defining the forward propagation part which may be performed, determining an equilibrium point of the iterative function at which the iterative function converges to a fixed point.

The system 100 may further comprise an output interface for outputting a data representation 112 of the trained neural network, this data may also be referred to as trained model data 112. For example, as also illustrated in FIG. 1, the output interface may be constituted by the data storage interface 104, with said interface being in these embodiments an input/output ('IO') interface, via which the trained model data 112 may be stored in the data storage 106. For example, the data representation 108 defining the 'untrained' neural network may during or after the training be replaced, at least in part by the data representation 112 of the trained neural network, in that the parameters of the neural network, such as weights, hyper parameters and other types of parameters of neural networks, may be adapted to reflect the training on the training data 102. This is also illustrated in FIG. 1 by the reference numerals 108, 112 referring to the same data record on the data storage 106. In other embodiments, the data representation 112 may be stored separately from the data representation 108 defining the 'untrained' neural network. In some embodiments, the output interface may be separate from the data storage interface 104, but may in general be of a type as described above for the data storage interface 104.

In various embodiments, the system for training a neural network may be implemented in a system for, e.g., image generation using diffusion models that incorporate optimal control in the image generation algorithms. The image generation system may be used in a wide variety of applications in which sensor signals are received and images based are generated based on the sensed data. The types of sensors may include cameras (video or still image), radar, LiDAR, ultrasonic, motion, etc., and the images captured by the sensors may be used to compute control signals for controlling a physical system. Such physical systems may includes a computer-controlled machine, like a robot, a vehicle, a domestic appliance, a manufacturing machine, a personal assistant or an access control system. Systems for conveying information may also utilize the system for training a neural network shown in FIG. 1, including surveillance systems or a medical (imaging) systems, among others.

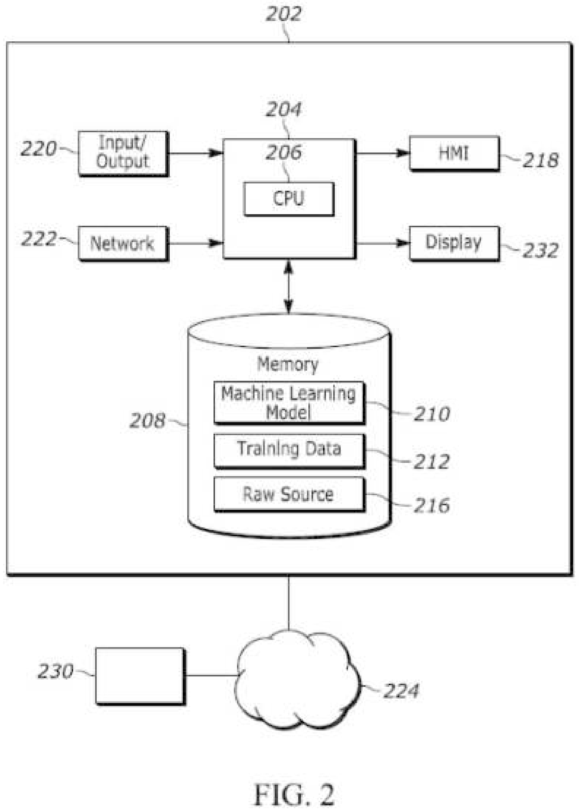

FIG. 2 depicts a system 200 to implement the machine learning models described herein, for example the diffusion models discussed above and further below. Other types of machine learning models can be used, and the DNNs described herein are not the only types of machine learning models capable of being used in the system of this disclosure. For example, if the input image contains an ordered sequence of pixels after converting CSI values to pixels in an image), a CNN may be utilized.

The system 200 can be implemented to perform one or more of the phases of image recognition described herein. The system 200 may include at least one computing system 202. The computing system 202 may include at least one processor 204 that is operatively connected to a memory unit 208. The processor 204 may include one or more integrated circuits that implement the functionality of a central processing unit (CPU) 206. The CPU 206 may be a commercially available processing unit that implements an instruction set such as one of the ×86, ARM, Power, or MIPS instruction set families. During operation, the CPU 206 may execute stored program instructions that are retrieved from the memory unit 208. The stored program instructions may include software that controls operation of the CPU 206 to perform the operation described herein. In some examples, the processor 204 may be a system on a chip (SoC) that integrates functionality of the CPU 206, the memory unit 208, a network interface, and input/output interfaces into a single integrated device. The computing system 202 may implement an operating system for managing various aspects of the operation. While one processor 204, one CPU 206, and one memory 208 is shown in FIG. 2, of course more than one of each can be utilized in an overall system.

The memory unit 208 may include volatile memory and non-volatile memory for storing instructions and data. The non-volatile memory may include solid-state memories, such as NAND flash memory, magnetic and optical storage media, or any other suitable data storage device that retains data when the computing system 202 is deactivated or loses electrical power. The volatile memory may include static and dynamic random-access memory (RAM) that stores program instructions and data. For example, the memory unit 208 may store a machine learning model 210 or algorithm, a training dataset 212 for the machine learning model 210, raw source dataset 216.

The computing system 202 may include a network interface device 222 that is configured to provide communication with external systems and devices. For example, the network interface device 222 may include a wired and/or wireless Ethernet interface as defined by Institute of Electrical and Electronics Engineers (IEEE) 802.11 family of standards. The network interface device 222 may include a cellular communication interface for communicating with a cellular network (e.g., 3G, 4G, 5G). The network interface device 222 may be further configured to provide a communication interface to an external network 224 or cloud.

The external network 224 may be referred to as the world-wide web or the Internet. The external network 224 may establish a standard communication protocol between computing devices. The external network 224 may allow information and data to be easily exchanged between computing devices and networks. One or more servers 230 may be in communication with the external network 224.

The computing system 202 may include an input/output (I/O) interface 220 that may be configured to provide digital and/or analog inputs and outputs. The I/O interface 220 is used to transfer information between internal storage and external input and/or output devices (e.g., HMI devices). The I/O 220 interface can includes associated circuitry or BUS networks to transfer information to or between the processor(s) and storage. For example, the I/O interface 220 can include digital I/O logic lines which can be read or set by the processor(s), handshake lines to supervise data transfer via the I/O lines; timing and counting facilities, and other structure known to provide such functions. Examples of input devices include a keyboard, mouse, sensors, etc. Examples of output devices include monitors, printers, speakers, etc. The I/O interface 220 may include additional serial interfaces for communicating with external devices (e.g., Universal Serial Bus (USB) interface). The I/O interface 220 can be referred to as an input interface (in that it transfers data from an external input, such as a sensor), or an output interface (in that it transfers data to an external output, such as a display).

The computing system 202 may include a human-machine interface (HMI) device 218 that may include any device that enables the system 200 to receive control input. Examples of input devices may include human interface inputs such as keyboards, mice, touchscreens, voice input devices, and other similar devices. The computing system 202 may include a display device 232. The computing system 202 may include hardware and software for outputting graphics and text information to the display device 232. The display device 232 may include an electronic display screen, projector, printer or other suitable device for displaying information to a user or operator. The computing system 202 may be further configured to allow interaction with remote HMI and remote display devices via the network interface device 222.

The system 200 may be implemented using one or multiple computing systems. While the example depicts a single computing system 202 that implements all of the described features, it is intended that various features and functions may be separated and implemented by multiple computing units in communication with one another. The particular system architecture selected may depend on a variety of factors.

The system 200 may implement a machine learning algorithm 210 that is configured to analyze the raw source dataset 216. The raw source dataset 216 may include raw or unprocessed sensor data that may be representative of an input dataset for a machine learning system. The raw source dataset 216 may include video, video segments, images, text-based information, audio or human speech, time series data (e.g., a pressure sensor signal over time), raw or partially processed sensor data (e.g., radar map of objects), wireless signals in terms of CSI, RSSI, CIR. Moreover, the raw source dataset 216 may be input data derived from an associated sensor such as a camera, LiDAR, radar, ultrasonic sensor, motion sensor, thermal imaging camera, wireless receivers, or any other type of sensor that produces associated data with spatial dimensions where there is some notion of a "foreground" and a "background" within those spatial dimensions. References to an input or input "image" herein is not necessarily from a camera, but can be from any of the above-listed sensors. Several different examples of inputs are shown and described with reference to the figures discussed below. In some examples, the machine learning algorithm 210 may be a neural network algorithm (e.g., deep neural network) that is designed to perform a predetermined function. For example, the neural network algorithm may be configured to identify defects (e.g., cracks, stresses, bumps, etc.) in a part subsequent to the manufacture of that part but prior to leaving the plant.

The computer system 200 may store a training dataset 212 for the machine learning algorithm 210. The training dataset 212 may represent a set of previously constructed data for training the machine learning algorithm 210. The training dataset 212 may be used by the machine learning algorithm 210 to learn weighting factors associated with a neural network algorithm. The training dataset 212 may include a set of source data that has corresponding outcomes or results that the machine learning algorithm 210 tries to duplicate via the learning process.

The machine learning algorithm 210 may be operated in a learning mode using the training dataset 212 as input. The machine learning algorithm 210 may be executed over a number of iterations using the data from the training dataset 212. With each iteration, the machine learning algorithm 210 may update internal weighting factors based on the achieved results. For example, the machine learning algorithm 210 can compare output results (e.g., a reconstructed or supplemented image, in the case where image data is the input) with those included in the training dataset 212. Since the training dataset 212 includes the expected results, the machine learning algorithm 210 can determine when performance is acceptable. After the machine learning algorithm 210 achieves a predetermined performance level (e.g., 100% agreement with the outcomes associated with the training dataset 212), or convergence, the machine learning algorithm 210 may be executed using data that is not in the training dataset 212. It should be understood that in this disclosure, "convergence" can mean a set (e.g., predetermined) number of iterations have occurred, or that the residual is sufficiently small (e.g., the change in the approximate probability over iterations is changing by less than a threshold), or other convergence conditions. The trained machine learning algorithm 210 may be applied to new datasets to generate annotated data.

The machine learning algorithm 210 may be configured to identify a particular feature in the raw source data 216. The raw source data 216 may include a plurality of instances or input dataset for which supplementation results are desired. For example, the machine learning algorithm 210 may be configured to identify the presence of a pedestrian in video images and annotate the occurrences. In another example, the machine learning algorithm 210 may be configured to identify the presence of a defect in a manufactured part by capturing images of that part. The machine learning algorithm 210 may be programmed to process the raw source data 216 to identify the presence of the particular features. The machine learning algorithm 210 may be configured to identify a feature in the raw source data 216 as a predetermined feature (e.g., obstacle, pedestrian, road sign, etc.). The raw source data 216 may be derived from a variety of sources. For example, the raw source data 216 may be actual input data collected by a machine learning system. The raw source data 216 may be machine generated for testing the system. As an example, the raw source data 216 may include raw video images from a camera.

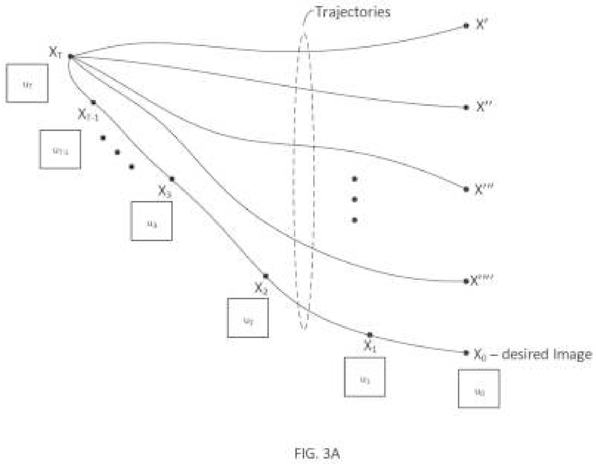

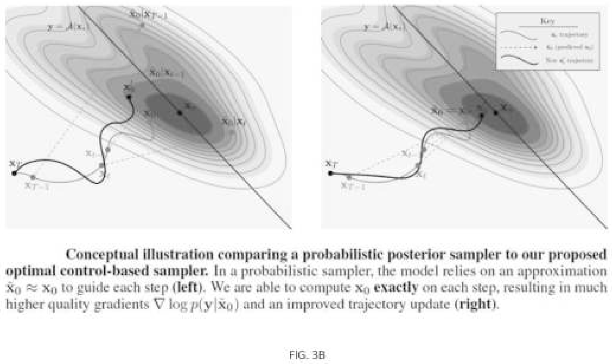

FIGS. 3A and 3B graphically illustrate the methodology of the present disclosure. FIG. 3A illustrates graphically an algorithm in which trajectories are calculated between a beginning state $x_T$, and end states, x', x" ... $x_0$, with $x_0$ representing the desired image based on, e.g., the sensed data (using optical sensors). Each of the calculated trajectories represents one iteration of the algorithm, which may be carried out for a predetermined number of iterations. Each of the predetermined trajectories includes executing first and second inner loops, which include a back propagation loop and a forward propagation loop. The algorithm shown here may use data obtained from sensors for various applications, with the images generated or recovered used to generate control signal outputs for, e.g., controlling a process. The algorithm is as follows, and will be explained in further detail below.

```
Algorithm 1 Diffusion Optimal Control
    Input: λ, T, y, x_T
    Initialize u_t, k_t, K_t as 0 for t = 1 ... T, {x'_t}^T_{t=0} as uncontrolled dynamics
    for iter = 1 to num_iters do
        V_x, V_xx ← ∇_{x_0} log p(y|x_0), ∇²_{x_0} log p(y|x_0)          ▷ Initialize derivatives of V(x_t, t)
        for t = 1 to T do
            Compute k_t, K_t, V_x, V_xx
        end for
        for t = T to 1 do
            x_{t-1} ← h(x_t, λk_t + K_t(x_t − x'_t))                      ▷ Update x_{t-1} with new u_t
            x'_{t-1} ← x_{t-1}
        end for
    end for
```

The algorithm shown above begins with a "nominal" trajectory, which is an unguided process that will produce a random image drawn from a modeled distribution. The goal is to guide the values of $x$ at each step $t$ so that $x_0$ looks like the solution to our inverse problem. That is, given a measurement $y = A(x^*)$ + noise (where $x^*$ is the actual data), we want $x_0$ to be as close as possible $x^*$. Three loop framework:

Algorithm 1 has three loops. The first loop is the main loop of the algorithm, and may be carried out for a predetermined number of iterations (num_iters). However, embodiments are possible and contemplated that the loop is carried out until a convergence value is reached. The second and third loops are inner loops with respect to the main loop.

Given a trajectory, execution of the second loop generates gradients and all the main mathematical objects ($V_x$, $V_{xx}$, $k_t$, $K_t$) in our Algorithm (see below). Note that due to convention, time runs backwards in a diffusion process, i.e., $t=T$, $T$-1, ..., $t$, $t$-1, ..., 0, as is reflected in the second inner loop. The value $k_t$ is a feedforward gain, while $K_t$ is a feedback gain. The subscripts $t$ are used to indicate time index $t$ meaning that the mathematical objects are time-varying, and the subscript refers to the value the object takes at a specific time $t$. The terms $V_x$ and $V_{xx}$ are first and second derivatives, respectively, of a value function and are also time-varying. The calculation of these terms will be discussed in further detail below. The second loop, which is executed from $t = 1$ to $T$, moves forward in time, with $T$ being the total time.

In the third loop, using the calculated values of $k_t$ and $K_T$, the third loop produces a new set of actions $u_t$ and determines a corresponding state trajectory starting from $x_T$ as shown in FIG. 3A. The value $\lambda$ is a step size value, $u_t$ is a time-indexed control vector value that is used for perturbing $x_t$ at the respective time step. The result after completing all iterations of the outer loop is a trajectory between the value of $x_T$ and the value of $x_0$, as shown in FIG. 3A, which represents the final image obtained from executing the algorithm. The development of this algorithm and the calculations involved therewith is now discussed in further detail.

Diffusion Models:

Diffusion models are a class of deep generative models that leverage the function-approximation capabilities of deep neural networks to learn the score function, mathematically represented by:

$$\nabla_{x_t} \log p(x_t)),$$

which provides the direction in which the likelihood of the data is the highest (i.e., the gradient of the data distribution). Once trained, the score function can be used to sample (i.e., to "generate" samples, even novel ones) from the learned data distribution. This is achieved using a reverse-time Itö stochastic differential equation (Itö-SDE) given by the following:

$$dx_t = [f(x_t) - g(t)^2 \nabla_{x_t} \log p_t(x_t)]dt + g(t)\, dw_t, \quad (1)$$

where, $x_t \in \mathbb{R}^n$ is the state-vector (in case of image data, this is a flattened vector of the 3D RGB image tensor), $t$ is a continuous-time variable used to denote the passage of time because diffusion is a continuously evolving process and therefore $x_t$ denotes the value of the state-vector at time $t$. The vector-valued function $f(x_t)$: $\mathbb{R}^n \longrightarrow \mathbb{R}^n$ is known as the drift vector function and $g(t)$ is known as the diffusion variable function. The drift vector controls the signal decay while the diffusion variable controls the noise injection of the process. Finally, the actual noise variable is $w_t$ which is mathematically a vector of mutually independent Brownian motions. The reason why this is a reverse-time SDE and not forward-time SDE is because diffusion models are trained to reverse a certain forward process. Specifically, the forward process is a noising (or corrupting) process which iteratively destroys the signal (i.e., iteratively increases the signal-to-noise ratio) over many time steps using additive Gaussian noise until we are left with what is essentially a noisy sample that can be assumed to have a Gaussian distribution. A diffusion model is then trained to reverse this corruption process and provide a "clean" (i.e., a noise-free) sample, from the underlying data distribution, starting from a noisy sample drawn from a Gaussian distribution. This is why the generation or sampling process for a trained diffusion model is a reverse-time SDE because one starts by sampling from a Gaussian distribution, and then proceeds backwards in time as given by equation (1) above iteratively removing noise from the sample using the learned score function.

Although continuous-time processes exist in nature, one needs to discretize the process in order to implement it on a computer. To do so, we start with the so-called Probability-Flow ODE (PF-ODE). This ODE is given by:

$$dx_t = dx_t + [f(x_t) - \tfrac{1}{2} g(t)^2 \nabla_{x_t} \log p_t(x_t)]dt, \quad (2)$$

with the same marginals $p_t(x_t)$ as the SDE. Practical implementations of diffusion samplers may require a time-discretization of the PF-ODE. One such discretization is the well-known Euler-discretization which gives:

$$x_{t-1} = x_t - [f(x_t) - \tfrac{1}{2} g(t)^2 \nabla_{x_t} \log p_t(x_t)]\Delta t, \quad (3)$$

where $\Delta t$ is the length of the discretization interval and we have reversed the time evolution by changing the sign of the drift. We are not restricted to only using the Euler-discretization and any high-order discretization techniques can also be employed. More concisely, this results in:

$$x_{t-1} = \mathbf{h}(x_t), \quad \text{where } \mathbf{h} : \mathbb{R}^n \longrightarrow \mathbb{R}^n, \quad (4)$$

which described the general non-linear dynamics of the corresponding discrete-time diffusion sampler.

Inverse Problems:

Inverse problems are a class of problems where the goal is to recover a hidden the unknown variable $x_0$ using only (potentially) noisy measurements y. The measurements are related to the unknown variable via a forward measurement process given by:

$$y = \mathcal{A}(x_0) + \eta, \quad (5)$$

where,

$$\mathcal{A} : \mathbb{R}^n \longrightarrow \mathbb{R}^d$$

is the so-called forward operator and $\eta \sim \mathcal{N}(0, \sigma I_d)$ is a Gaussian noise variable with variance $\sigma^2$.

It is assumed that access is available to a pre-trained, off-the-shelf diffusion model that has been trained on large-scale publicly-available data (such as that available on the internet e.g., the Stable Diffusion Model) of the same type as the aforementioned unknown variable $x_0$. Thus, one has access to the distribution $p(x)$ in form of the diffusion model (we drop the subscript 0 to imply a general distribution as against a specific sample from the distribution which will be denoted using the subscript) which can be used to sample instances i.e., $x_0 \sim p(x)$ using equation (1) above. Mathematically, given a measurement $y$ that corresponds to a $x_0$ that was (potentially) not seen during training the diffusion model, the goal of recovering the unknown $x_0$ mathematically corresponds to sampling from the posterior distribution of $p(x|y)$.

Given the forward model equation 5 and a measurement $y$, sampling from the posterior distribution, $p(x|y)$ can then be performed by solving the conditional Itö-SDE:

$$dx = [ f(x_t) - \frac{1}{2} g(t)^2 \nabla_x \log p_t(x|y)]dt + g(t) \, dw_t, \quad (6)$$

where invoking Bayes rule:

$$\nabla_x \log p_t(x|y) = \nabla_x \log p_t(x) + \nabla_x \log p_t(y|x), \quad (7).$$

As with the unconditional dynamics, equation 6 has a corresponding ODE:

$$dx = [ f(x_t) - \frac{1}{2} g(t)^2 \nabla_x \log p_t(x|y)]dt, \quad (8)$$

which has an approximate solution obtained by the Euler discretization:

$$x_{t-1} = x_t + [ f(x_t) - \frac{1}{2} g(t)^2 \nabla_{x_t} \log p_t(x_t|y)]\Delta t. \quad (9)$$

Optimal Control:

Optimal control is a class of algorithms from robotics wherein the goal is to minimize a user-defined cost (or energy) function that mathematically describes the task to be performed, with respect to a trajectory of controls subject to the dynamics of the system (e.g., the system could be a robot or an arbitrary autonomous agent). Specifically, the cost function is computed over a trajectory of future states of the system, starting from the current state, which are obtained by executing the current iteration of the control trajectory on the dynamics model of the system.

These algorithms presume the availability of a dynamics model which can be a physics-based model, a data-driven model or a combination of the two. These algorithms are therefore also referred to as trajectory optimization (or simply TrajOpt) algorithms and the output of these algorithms (after convergence of the algorithm i.e., after the trajectory cost has been minimized) is the optimal control trajectory which when executed on the real system would result in optimal behavior with respect to the cost function.

On commonly used TrajOpt algorithm in literature is called Iterative Linear Quadratic Regulator (iLQR). This algorithm has been applied to control various systems in different domains such as robotics, biology, aerospace systems, and in quantitative finance, among others. The iLQR algorithm uses a first-order approximation of the dynamics model of the system and second-order approximations of the value-function.

In applying iLQR to problems in machine learning (ML), the ML algorithm or some subcomponent thereof may be treated as a discrete-time dynamical system to be controlled. The goal of TrajOpt is to use control to improve the algorithm's performance thereby transferring the successful use of iLQR and tools developed from other scientific research domains such as robotics into the ML domain.

An example of the dynamical system encountered in diffusion modeling is given above by equation (9). This is an uncontrolled dynamical system, because without adding control (i.e., without any modifications to equation (9), the present disclosure allows recovery the original algorithm. A TrajOpt algorithm can be used to change the evolution of the reverse-time dynamics of a diffusion model, thereby changing the resulting final clean image $x_0$ of the generation (or sampling) process. This is achieved by adding a control term to the right-hand side of equation 9, designing a cost function to be minimized and using the TrajOpt algorithm to compute an optimal control trajectory that minimizes the cost function subject to the control-modified version of equation 9. The iLQR is now explain in further detail.

Broadly speaking, a cost function, is a mathematical formula used to quantify the "cost" or "error" of a particular solution or model, often used in optimization problems and machine learning. For the present disclosure, a user-defined global cost function may be written as follows:

$$J_T = \sum_{t=T}^{1} \ell_t(x_t, u_t) + \ell_0(x_0), \quad (10)$$

Composed of a sum over scalar-valued running and terminal cost functions $\ell_t$ and $\ell_0$. Optimal control theory dictates that the value function $V(x_t, t) := min_{\{u_n\}_{n=t}^{n=1}} J_T$ satisfies the following recursive relations known as Bellman's Principle of Optimality:

$$V(x_t, t) = \min_{u_t}[\ell_t(x_t, u_t) + V(x_{t-1}, t-1)]. \quad (11)$$

The iLQR algorithm centers around approximating the state-action value function:

$$Q(x_t, u_t) := \ell_t(x_t, u_t) + V(x_{t-1}, t-1), \quad (12)$$

from which the value function can be recovered as $V(x_t, t) = min_{u_t} Q(x_t, u_t)$.

Then, given a state transition function $x_t = h(x_{t+1}, u_{t+1})$ where we note where time has been defined to flow backwards from $t = T, ..., 0$, the iLQR algorithm has feedforward and feedback gains $k_t$ and $K_t$, respectively, and which are defined as follows:

$$k_t = - Q_{uu}^{-1} Q_u \text{ and } K_t = - Q_{uu}^{-1} Q_{ux}. \quad (13)$$

The update of the value functions can thus be written as:

$$V_x = Q_x - K_t^T Q_{uu} k_t \text{ and } Vxx = Q_{xx} - K_t^T Q_{uu} K_t. \quad (14)$$

Given the feedback and feedforward gains $\{(K_t, k_t)\}_{t=0}^{T}$ and $\bar{x}_0 := x_0$, the new optimal control trajectory can be recursively obtained for each time step $t$ as a function of the states $x_t$ and current version of the control $u_t$ as follows:

$$\bar{x}_t = h(\bar{x}_{t+1}, u_{t+1}^*) \quad (15)$$

$$u_t^* = u_t + \lambda k + K(\bar{x}_t - x_t). \quad (16)$$

Diffusion Optimal Control:

As mentioned above, in the context of applying TrajOpt algorithms to improve the performance of deep generative models, equation (9) may be treated as an uncontrolled discrete-time dynamical system. Because it represents the generation process, it evolves reverse in time starting from initial time $t = T$ to final time $t = 0$. The role of the TrajOpt algorithm is to compute a trajectory of optimal control vectors $u_t \in \mathbb{R}^n$ for $t = \{T, T-1, T-2, ..., 1\}$ such that when injected into the dynamics of equation (9) at every time step $t = \{T, T-1, T-2, ..., 1\}$ will result in the final clean image at $t = 0$ such that $x_0 \sim p(x|y)$ i.e., the unknown variable may be recovered with the high accuracy. There are two possible ways to inject control into equation (9):

    1. In input perturbation control, we apply the $u_t$ before the diffusion step:

$$x_{t-1} = (x_t + u_t) - [f(x_t + u_t) - \frac{1}{2} g(t)^2 \nabla_x \log p_t(x_t + u_t)]\Delta t. \quad (17)$$

    2. In output perturbation control, $u_t$ is applied after the diffusion step:

$$x_{t-1} = x_t - [f(x_t + u_t) - \frac{1}{2} g(t)^2 \, \nabla_x \log p_t(x_t + u_t)]\Delta t + u_t. \quad (18)$$

It is observed that iLQR may be formulated for general discrete-time dynamic processes. When applied specifically to the reverse diffusion dynamics of diffusion models, several simplifications may be carried out. First, it can be assumed that there is no access to any guidance except at time t = 0 - i.e., $\ell_t(x_t, u_t)$ does not depend on $x_t$.

In the case of input perturbation control, an observation can be made from equation 17 that $h_x = h_u$, whereas the case of output perturbation control implies that $h_u = I$, resulting in the left and right equations, respectively:

$$Q_x = h_x^T V_x' \qquad\qquad Q_x = h_x^T V_x' \qquad (19)$$
$$Q_u = \ell_u + h_x^T V_x' \qquad\qquad Q_u = \ell_u + V_x' \qquad (20)$$
$$Qxx = h_x^T V_{xx}' \, hx \qquad\qquad Qxx = h_x^T V_{xx}' \, hx \qquad (21)$$
$$Qux = Qxu = h_x^T V_{xx}' \, hx \qquad Qux = Q_{xu}^T = V_{xx}' \, hx \qquad (22)$$
$$Quu = \ell uu + h_x^T V_{xx}' hx \qquad\qquad Quu = \ell uu + V_{xx}'. \qquad (23)$$

<div align="center">Input Perturbation        Output Perturbation</div>

It is noted that in equations 19-23 above, the bolded terms denote partial derivatives. For e.g., $Q_x$ is the partial derivative of Q with respect to the vector $x$ or the gradient of Q with respect to $x$, $Q_{xx}$ is the Hessian of Q with respect to $x$ and $Q_{xu}$ is the second order partial derivative of Q with respect to $x$ followed by $u$. Note that the time index $t$ has been dropped from all the terms above to avoid cluttered notation and for brevity, but each of the terms above is time-varying and dependent on the time index $t$.

The derivatives of V can then be back-propagated using the following equations:

$$V_x = Q_x - K^T \, Quu k = Qxx - K^T QuuK$$
$$= Q_x + Q_{ux}^T Q_{uu}^{-1} Q_u \quad (24)$$

$$Vxx = Q_{xx} - K^T Q_{uu}K =$$
$$= Q_{xx} - Q_{ux}^T Q_{ux}^T Q_{ux}. \quad (25)$$

In high dimensional systems such as equation 3, matrices may be singular. Therefore, a Tikhonov regularized variant of iLQR may be employed, where matrix inverses are regularized by a diagonal matrix.

FIG. 3B is another graphic illustration of the methodology of the present disclosure. In particular, FIG. 3B compares the present methodology (right-hand side) with a previous methodology that utilized Tweedie's Formula to compute $\widetilde{x_0}$, which is an approximation to the true $x_0$ in order to compute $\nabla_x \log p_t(y|x_t)$. The methodology of the disclosure uses the exact $x_0$ instead, thereby leading to a more accurate computation of $\nabla_x \log p_t(y|x_t)$. Overall as seen in FIG. 3B, final generated clean image $x'_0$ (utilizing the disclosed methodology) is closer on the right-hand side to the true unknown variable $x_0$ than on the left-hand side.

FIG. 3B also illustrates respective trajectories between $x_T$ and $x'_0$ on both the left- and right-hand sides. On the right-hand side, the trajectory does not vary as much as that on the left-hand side as a result of the methodology, which leads to the more accurate final image.

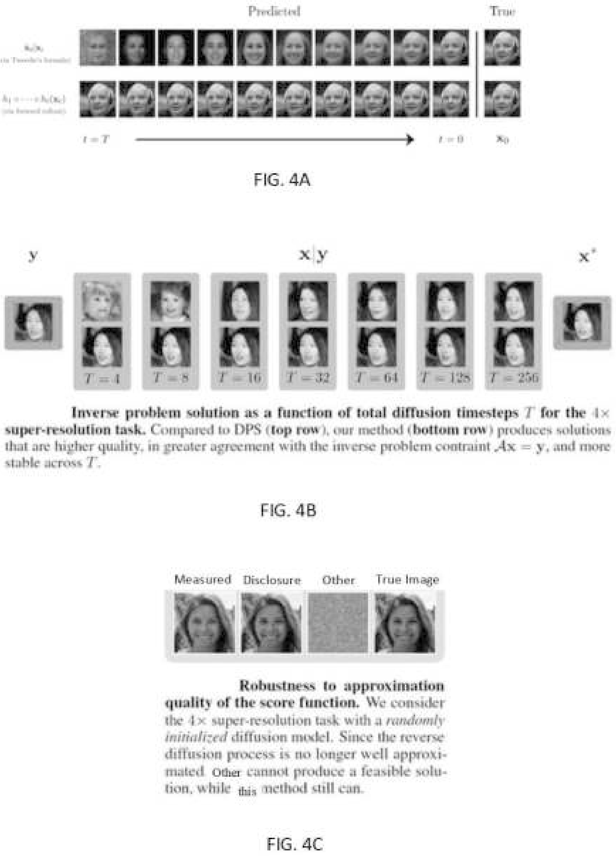

FIG. 4A illustrates a first example of image generation of the present disclosure relative to another method. What is depicted as an abstraction in FIGs. 3A and 3B are shown qualitatively in Figure 4A wherein using Tweedie's formula leads to a less accurate approximation of the predicted $x_0$, while the predictions $x'_0$ are seen to "bounce" around the true $x_0$. This is visualized above in FIG. 4A where these different $x'_0$ represent images of different people. On the other hand, the disclosed methodology may lead to the accurate $x_0$ from any diffusion time step. This is because disclosed methodology relies on unrolling the actual diffusion model dynamics to obtain the true $x_0$ rather than relying on Tweedie's formula.

As derived in the enclosed paper, the methodology establishes a theoretical result given by the statement of the following theorem:

- Let equation 3 be the discretized sampling equation for the diffusion model with output perturbation mode control (equation 18). Moreover, let the terminal cost

$$\ell_0(\mathbf{x}_0) = -\log p(\mathbf{y}|\mathbf{x}_0), \quad (27)$$

be twice differentiable, and the running costs

$$\ell_t(\mathbf{x}_t, \mathbf{u}_t) = 0, \quad (28)$$

then the iterative linear quadratic regulator with Tikhonov regularizer $\alpha$ produces the control:

$$\boldsymbol{u}_t = \alpha \nabla_{x_t} \log p(\boldsymbol{y}|\boldsymbol{x}_0). \quad (29)$$

In the disclosed methodology, as shown above, the dynamics used for generation by the diffusion model are deterministic (as against stochastic dynamics used in prior work), resulting in the equality of $p(y|x_t) = p(y|x_0)$. Therefore, the theorem above shows that disclosed methodology is able to recover the true posterior sampler under appropriate choice of Tikhonov regularization constant $\alpha$. As a result, approximations to the conditional score function $\nabla_x \log p_t(y|x_t)$ are not necessary.

FIG. 4B illustrates a second example of image generation of the present disclosure relative to another method. FIG. 4B further illustrates that the methodology of the present disclosure is immune to the discretization of the generation equation.

The equation used for the generation process in diffusion models is a discretized (in time) version of a continuous-time equation. As explained above, the equation 3 is a discrete-time version of the continuous-time equation 2. This enables the implementation of diffusion models on a digital computer. However, the accuracy of the generation process relies on the number of discretization steps. The larger the number of steps, the more accurate the generation process. This problem is amplified when using diffusion models to solve inverse problems using the methods listed in the prior art section. This is because the prior art relies on using Tweedie's formula to approximate $x_0$ in order to compute the conditional score function $\nabla_x \log p_t(y|x_t)$. When the number of discretization steps are large, there are more chances to correct for previous steps that used a poor approximation of $x_0$. But when the number of discretization steps are small, poor approximations can lead to large errors therefore inaccurate predictions of the unknown variable $x_0$ as seen in the top row of the Figure 4B.

On the other hand, the methodology of the present disclosure is immune to the number of discretization steps, because it uses the discretized generation equation and a control trajectory to "unroll" or execute the dynamics and obtain the true $x_0$. Therefore, even if the discretization steps are very small (e.g. $T = 4$ in the first column of FIG. 4B), the disclosed methodology can compute the necessary control perturbations for the small number of steps to obtain an accurate estimate of the unknown variable $x_0$.

FIG. 4C illustrates a third example of image generation of the present disclosure relative to another method. Furthermore, FIG. 4C illustrates that the methodology of the present disclosure is immune to the quality of the diffusion model (i.e. the trained score function).

Many other methodologies rely on Tweedie's formula which in turn relies on the score function to approximate $x_0$. Therefore, a poor quality diffusion model (i.e., a poor quality score function) can lead to poor approximations of $x_0$, thereby affecting the solution of the inverse problem. Because disclosed methodology relies on Trajectory Optimization which computes an optimal control trajectory for any generalized dynamical system, it can even work with a completely random diffusion model. This is because a random diffusion model also defines a unique dynamical system, and the Trajectory Optimization algorithm then finds an optimal control trajectory to solve the inverse problem subject to those unique dynamics. This is depicted in FIG. 4C.

FIG. 4C illustrates both a measured image (far left) and the corresponding true image (far right) with the result of disclosed methodology ("Disclosure") and another methodology. Whereas the disclosed methodology results in a reasonably accurate depiction of the true image (and one close to the measured image), the other methodology ("Other") produces what is effectively static.

The methodology of the present disclosure has a wide variety of applications. The methodology may be implemented in various types of systems that receive signals from various types of sensors, such as video, radar, LiDAR, ultrasonic, motion, and so on. Using generated images, one or more control signals may be computed and generated to control a physical system, such as various types of a computer-controlled machines. Such machines may include a robot, a vehicle, a domestic appliance, a power tool, a manufacturing machine, a personal assistant or an access control system.

The disclosure further contemplates systems for computing and generating control signals, using the disclosed methodology, in systems used to convey information. This may include surveillance systems, medical imaging systems, surveying systems (e.g., for surveying an underwater environment utilizing acoustic and/or magnetic sensors) and so on.

The disclosed method may operate in various applications by solving image enhancement tasks such as image super-resolution, image in-painting/in-filling, and image de-blurring (of Gaussian blurred or motion blurred images). This may be useful in various medical imaging applications, such as CT scanning. The ability to solve more complex inverse problems may also be useful in applications such as x-ray crystallography and transmission electron microscopy.

In a manufacturing setting, the disclosed methodology can be used to potentially reduce the cost of sensors and eventually the cost of the manufactured goods. We may require as few as a single high-fidelity sensor to record a dataset and train a diffusion model to serve as our prior model. Then cheaper sensors can be used and their signals can be combined with the pre-trained diffusion prior model and the method discussed above to produce high-fidelity signals that would have been obtained if an expensive high-fidelity sensor were used. This may result in enhanced cost effectiveness when setting up a new assembly line in a new plant as well as for future maintenance wherein the sensors that may need to be replaced and can be replaced by less expensive ones.

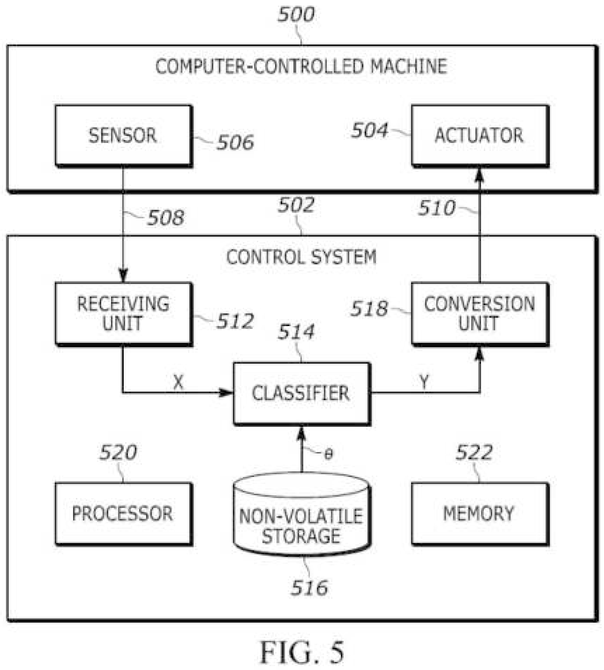

FIG. 5 depicts a schematic diagram of an interaction between a computer-controlled machine 500 and a control system 502. Computer-controlled machine 500 includes actuator 504 and sensor 506. Actuator 504 may include one or more actuators and sensor 506 may include one or more sensors. Sensor 506 is configured to sense a condition of computer-controlled machine 500. Sensor 506 may be configured to encode the sensed condition into sensor signals 508 and to transmit sensor signals 508 to control system 502. Non-limiting examples of sensor 506 include wireless receivers, video, radar, LiDAR, ultrasonic and motion sensors, as described above with reference to FIGS. 1-2. Embodiments in which a combination of different sensors are also possible and contemplated.

Sensor 506 may, in various embodiments, be a type of sensor capable of capturing raw image data. Utilizing the methodology disclosed elsewhere herein, the control system 502 and/or computer-controlled machine 500 may generate, using the measured raw image data, a final image that reflects the sensed information with a desired level of accuracy. This image may, in various embodiments, be used to generate one or more control signals by control system 502 to carry out its intended control functions. Images generate for further analysis (e.g., in medical imaging) is another application that is possible and contemplated.

Control system 502 is configured to receive sensor signals 508 from computer-controlled machine 500. As set forth below, control system 502 may be further configured to compute actuator control commands 510 depending on the sensor signals and to transmit actuator control commands 510 to actuator 504 of computer-controlled machine 500.

As shown in FIG. 5, control system 502 includes receiving unit 512. Receiving unit 512 may be configured to receive sensor signals 508 from sensor 506 and to transform sensor signals 508 into input signals x. In an alternative embodiment, sensor signals 508 are received directly as input signals x without receiving unit 512. Each input signal x may be a portion of each sensor signal 508. Receiving unit 512 may be configured to process each sensor signal 508 to product each input signal x. Input signal x may include data corresponding to an image recorded by sensor 506.

Control system 502 includes a classifier 514. Classifier 514 may be configured to classify input signals x into one or more labels using a machine learning (ML) algorithm, such as a neural network described above. Classifier 514 is configured to be parametrized by parameters, such as those described above (e.g., parameter $\theta$). Parameters $\theta$ may be stored in and provided by non-volatile storage 516. Classifier 514 is configured to determine output signals y from input signals x. Each output signal y includes information that assigns one or more labels to each input signal x. Classifier 514 may transmit output signals y to conversion unit 518. Conversion unit 518 is configured to covert output signals y into actuator control commands 510. Control system 502 is configured to transmit actuator control commands 510 to actuator 504, which is configured to actuate computer-controlled machine 500 in response to actuator control commands 510. In another embodiment, actuator 504 is configured to actuate computer-controlled machine 500 based directly on output signals y.

Upon receipt of actuator control commands 510 by actuator 504, actuator 504 is configured to execute an action corresponding to the related actuator control command 510. Actuator 504 may include a control logic configured to transform actuator control commands 510 into a second actuator control command, which is utilized to control actuator 504. In one or more embodiments, actuator control commands 510 may be utilized to control a display instead of or in addition to an actuator.

In another embodiment, control system 502 includes sensor 506 instead of or in addition to computer-controlled machine 500 including sensor 506. Control system 502 may also include actuator 504 instead of or in addition to computer-controlled machine 500 including actuator 504.

As shown in FIG. 5, control system 502 also includes processor 520 and memory 522. Processor 520 may include one or more processors. Memory 522 may include one or more memory devices. The classifier 514 (e.g., machine learning algorithms, such as those described above with regard to pre-trained classifier 306) of one or more embodiments may be implemented by control system 502, which includes non-volatile storage 516, processor 520 and memory 522.

Non-volatile storage 516 may include one or more persistent data storage devices such as a hard drive, optical drive, tape drive, non-volatile solid-state device, cloud storage or any other device capable of persistently storing information. Processor 520 may include one or more devices selected from high-performance computing (HPC) systems including high-performance cores, microprocessors, micro-controllers, digital signal processors, microcomputers, central processing units, field programmable gate arrays, programmable logic devices, state machines, logic circuits, analog circuits, digital circuits, or any other devices that manipulate signals (analog or digital) based on computer-executable instructions residing in memory 522. Memory 522 may include a single memory device or a number of memory devices including, but not limited to, random access memory (RAM), volatile memory, non-volatile memory, static random access memory (SRAM), dynamic random access memory (DRAM), flash memory, cache memory, or any other device capable of storing information.

Processor 520 may be configured to read into memory 522 and execute computer-executable instructions residing in non-volatile storage 516 and embodying one or more ML algorithms and/or methodologies of one or more embodiments. Non-volatile storage 516 may include one or more operating systems and applications. Non-volatile storage 516 may store compiled and/or interpreted from computer programs created using a variety of programming languages and/or technologies, including, without limitation, and either alone or in combination, Java, C, C++, C #, Objective C, Fortran, Pascal, Java Script, Python, Perl, and PL/SQL.

Upon execution by processor 520, the computer-executable instructions of non-volatile storage 516 may cause control system 502 to implement one or more of the ML algorithms and/or methodologies as disclosed herein. Non-volatile storage 516 may also include ML data (including data parameters) supporting the functions, features, and processes of the one or more embodiments described herein.

The program code embodying the algorithms and/or methodologies described herein is capable of being individually or collectively distributed as a program product in a variety of different forms. The program code may be distributed using a computer readable storage medium having computer readable program instructions thereon for causing a processor to carry out aspects of one or more embodiments. Computer readable storage media, which is inherently non-transitory, may include volatile and non-volatile, and removable and non-removable tangible media implemented in any method or technology for storage of information, such as computer-readable instructions, data structures, program modules, or other data. Computer readable storage media may further include RAM, ROM, erasable programmable read-only memory (EPROM), electrically erasable programmable read-only memory (EEPROM), flash memory or other solid state memory technology, portable compact disc read-only memory (CD-ROM), or other optical storage, magnetic cassettes, magnetic tape, magnetic disk storage or other magnetic storage devices, or any other medium that can be used to store the desired information and which can be read by a computer. Computer readable program instructions may be downloaded to a computer, another type of programmable data processing apparatus, or another device from a computer readable storage medium or to an external computer or external storage device via a network.

Computer readable program instructions stored in a computer readable medium may be used to direct a computer, other types of programmable data processing apparatus, or other devices to function in a particular manner, such that the instructions stored in the computer readable medium produce an article of manufacture including instructions that implement the functions, acts, and/or operations specified in the flowcharts or diagrams. In certain alternative embodiments, the functions, acts, and/or operations specified in the flowcharts and diagrams may be re-ordered, processed serially, and/or processed concurrently consistent with one or more embodiments. Moreover, any of the flowcharts and/or diagrams may include more or fewer nodes or blocks than those illustrated consistent with one or more embodiments.

The processes, methods, or algorithms can be embodied in whole or in part using suitable hardware components, such as Application Specific Integrated Circuits (ASICs), Field-Programmable Gate Arrays (FPGAs), state machines, controllers or other hardware components or devices, or a combination of hardware, software and firmware components.

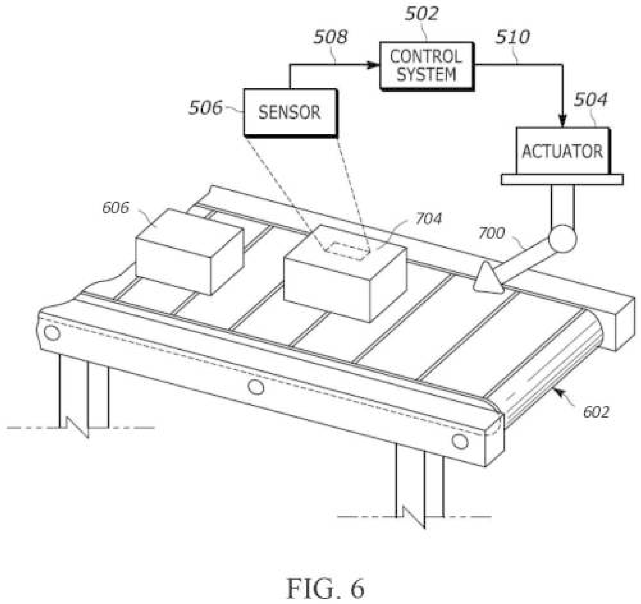

FIG. 6 depicts a schematic diagram of control system 502 configured to control system 600 (e.g., manufacturing machine), such as a punch cutter, a cutter or a gun drill, of manufacturing system 602, such as part of a production line. Control system 502 may be configured to control actuator 504, which is configured to control system 600 (e.g., manufacturing machine).

Sensor 506 of system 600 (e.g., manufacturing machine) may be an optical sensor (such as those described above) configured to capture one or more properties of manufactured product 604. Classifier 514 may be configured to determine a state of manufactured product 604 from one or more of the captured properties. Actuator 504 may be configured to control system 600 (e.g., manufacturing machine) depending on the determined state of manufactured product 604 for a subsequent manufacturing step of manufactured product 604, or for binning the manufactured product 604 (e.g., discard, sorting, marking, trimming, or repair) if the manufactured product 604 has a detected defect. The actuator 504 may be configured to control functions of system 600 (e.g., manufacturing machine) on subsequent manufactured product 606 of system 600 (e.g., manufacturing machine) depending on the determined state of manufactured product 604.

In some embodiments, sensor 506 may be coupled to receive and process raw image data while control system 502 may use the information obtained therefrom for generate control signals to control the process carried out by system 600. More particularly, system 600 may generate images in accordance with the methodology described elsewhere herein, using the raw image data gathered by the sensors, to control the process.

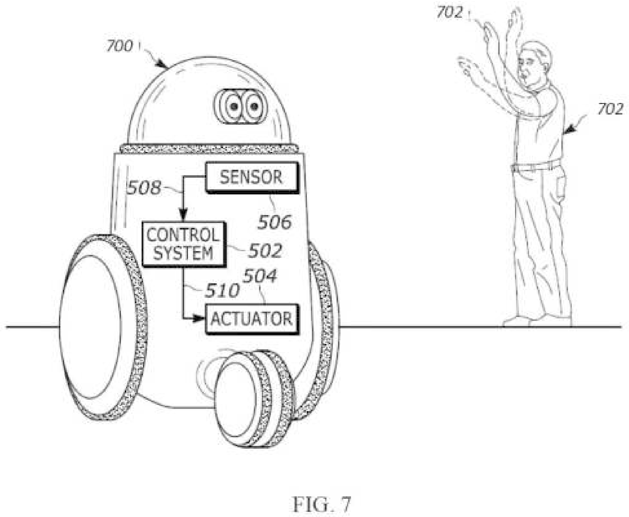

FIG. 7 depicts a schematic diagram of control system 502 configured to control automated personal assistant 700. Control system 502 may be configured to control actuator 504, which is configured to control automated personal assistant 700. Automated personal assistant 700 be configured to process image data and act thereupon. For example, automated personal assistant may be capable of autonomous motion and carry out control of that motion based on image data gathered from sensors and processed according to the methods of the present disclosure. The sensors for gathering image data may include LiDAR, video, acoustic, wireless, and any other type of sensor from which images may be generated.

Sensor 506 may be an optical sensor and/or an audio sensor. The optical sensor may be configured to receive video images of gestures 704 of user 702. The audio sensor may be configured to receive a voice command of user 702. Sensor 506 may also be capable of recording other types of image data, such as thermal imaging.

Control system 502 of automated personal assistant 700 may be configured to determine actuator control commands 510 that control the motion of the latter. Control system 502 may be configured to determine actuator control commands 510 in accordance with sensor signals 508 of sensor 506. Automated personal assistant 700 is configured to transmit sensor signals 508 to control system 502. Classifier 514 of control system 502 may be configured to execute a gesture recognition algorithm to identify gesture 704 made by user 702, to determine actuator control commands 510, and to transmit the actuator control commands 510 to actuator 504. Classifier 514 may be configured to retrieve information from non-volatile storage in response to gesture 704 and to output the retrieved information in a form suitable for reception by user 702. Control system 502 may also be configured to execute the various diffusion modules described herein in order to generate images that are used to generate control signals that may be translated into various ones of the actuator control commands 510.

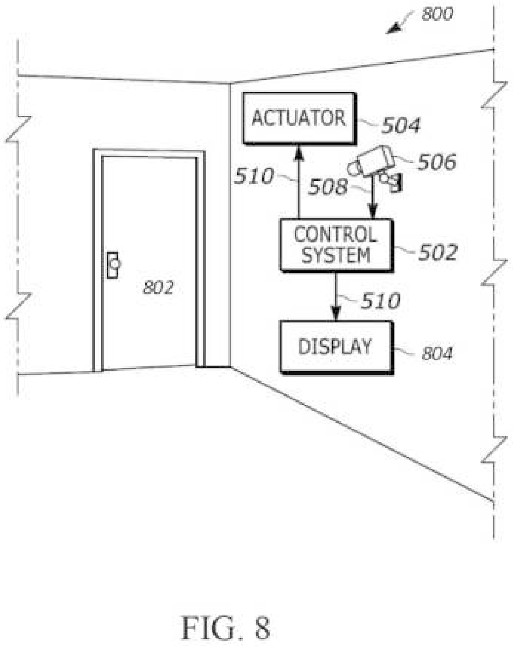

FIG. 8 depicts a schematic diagram of control system 502 configured to control monitoring system 800. Monitoring system 800 may be configured to physically control access through door 802. Sensor 506 may be configured to detect a scene that is relevant in deciding whether access is granted. Sensor 506 may be an optical sensor configured to generate and transmit image and/or video data. Such data may be used by control system 502 to detect a person, and may use image data obtained and processed according to the methods discussed above for personal identification.

Classifier 514 of control system 502 of monitoring system 800 may be configured to interpret the image and/or video data by matching identities of known people stored in non-volatile storage 516, thereby determining an identity of a person. Classifier 514 may be configured to generate an actuator control command 510 in response to the interpretation of the image and/or video data. Control system 502 is configured to transmit the actuator control command 510 to actuator 504. In this embodiment, actuator 504 may be configured to lock or unlock door 802 in response to the actuator control command 510. In other embodiments, a non-physical, logical access control is also possible. In some embodiments, classifier 514 may be configured to generate an actuator control command based on identification of a particular person based on wireless signals received by a wireless receiver in sensor 506. For example, classifier 514 may generate a command to cause actuator 504 to adjust a temperature setting for the particular person identified based on wireless signals.

Monitoring system 800 may also be a surveillance system. In such an embodiment, sensor 506 may be an optical sensor or a wireless receiver and/or a wireless transmitter configured to detect a scene that is under surveillance and control system 502 is configured to control display 804. Classifier 514 is configured to determine a classification of a scene, e.g. whether the scene detected by sensor 506 is suspicious. Control system 502 is configured to transmit an actuator control command 510 to display 804 in response to the classification. Display 804 may be configured to adjust the displayed content in response to the actuator control command 510. For instance, display 804 may highlight an object that is deemed suspicious by classifier 514. Utilizing an embodiment of the system disclosed, the surveillance system may predict objects at certain times in the future showing up.

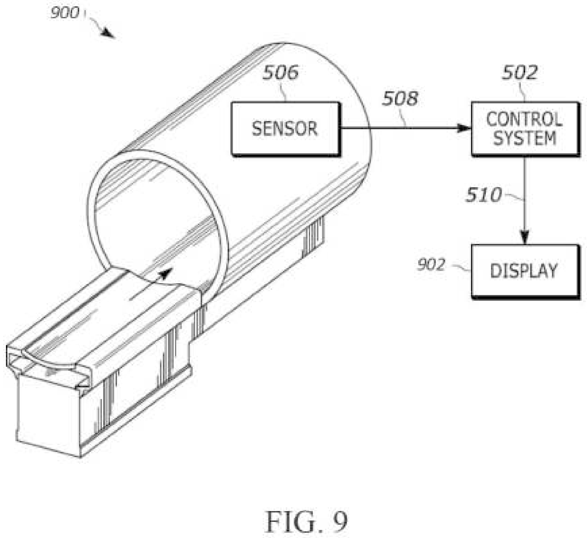

FIG. 9 depicts a schematic diagram of control system 502 configured to control imaging system 900, for example a Mill apparatus, x-ray imaging apparatus or ultrasonic apparatus. Sensor 506 may, for example, be an imaging sensor. Classifier 514 may be configured to determine a classification of all or part of the sensed image. Classifier 514 may be configured to determine or select an actuator control command 510 in response to the classification obtained by the trained neural network. For example, classifier 514 may interpret a region of a sensed image to be potentially anomalous. In this case, actuator control command 510 may be determined or selected to cause display 902 to display the imaging and highlighting the potentially anomalous region.

In various embodiments, sensor 506 may also include circuitry for receiving and processing wireless signals. Classifier 514 may use the wireless signals to identify a particular person. Based on the identification, classifier 514 may cause generation of one or more commands to control imaging system 900.

While exemplary embodiments are described above, it is not intended that these embodiments describe all possible forms encompassed by the claims. The words used in the specification are words of description rather than limitation, and it is understood that various changes can be made without departing from the spirit and scope of the disclosure. As previously described, the features of various embodiments can be combined to form further embodiments of the invention that may not be explicitly described or illustrated. While various embodiments could have been described as providing advantages or being preferred over other embodiments or prior art implementations with respect to one or more desired characteristics, those of ordinary skill in the art recognize that one or more features or characteristics can be compromised to achieve desired overall system attributes, which depend on the specific application and implementation. These attributes can include, but are not limited to cost, strength, durability, life cycle cost, marketability, appearance, packaging, size, serviceability, weight, manufacturability, ease of assembly, etc. As such, to the extent any embodiments are described as less desirable than other embodiments or prior art implementations with respect to one or more characteristics, these embodiments are not outside the scope of the disclosure and can be desirable for particular applications.

**Claims**

1. A method for generating an image, the method comprising:

receiving a step size value, a state vector, and a measurement value corresponding to an initial image;
determining a first gradient value and a second gradient value based on the measurement value;
executing a first loop in a first plurality of steps each having a particular increment size, from a first time value to a last time value, wherein executing the first loop comprises:

updating the first and second gradient values using values of the state vector; and
computing a feedforward gain value and a feedback gain value, using the first and second gradient values, for each of the first plurality of steps; and

executing a second loop in a second plurality of steps each having the step size value, from the last time value to the first time value, wherein executing the second loop comprises:

re-computing the values of the state vector using the feedforward gain value and feedback gain value computed during execution of the first loop; and
generating updated values of a control vector based on the values of the state vector subsequent to the re-computing;

repeating the execution of the first loop and the second loop for a predetermined number of iterations; and
generating a final image based on values of the state vector and the control vector after completion of the repeating execution of the first loop and the second loop.

2. The method of claim 1, further comprising generating, using a control system, one or more control signals based on the final image.

3. The method of claim 2, wherein the control system includes one or more sensors configured to generate the measurement values.

4. The method of claim 3, wherein the one or more sensors include a video camera.

5. The method of claim 3, wherein the one or more sensors include one or more X-ray detectors.

6. The method of claim 3, wherein the one or more sensor include LiDAR.

7. The method of claim 2, further comprising the control system controlling a manufacturing process.

8. The method of claim 2, further comprising the control system controlling an autonomous personal assistant.

9. The method of claim 2, further comprising the control system generating signals control signals for an actuator based on the final image.

10. The method of claim 1, wherein executing the first loop comprises executing a diffusion model.

11. A system for generating an image based on measured data, the system comprising:

one or more sensors configured to generate a measurement value corresponding to an initial image;
a processor configured to:

> determine a first gradient value and a second gradient value based on the measurement value;
> execute a first loop in a first plurality of steps each having a particular increment size, from a first time value to a last time value, wherein to execute the first loop, the processor is further configured to:
>
>> update the first and second gradient values using values of a state vector; and
>> compute a feedforward gain value and a feedback gain value, using the first and second gradient values, for each of the first plurality of steps; and
>
> execute a second loop in a second plurality of steps each having a step size value, from the last time value to the first time value, wherein to execute the second loop, the processor is further configured to:
>
>> re-compute the values of the state vector using the feedforward gain value and feedback gain value computed during execution of the first loop; and
>> generate updated values of a control vector based on the values of the state vector subsequent to the re-computing;
>
> repeat execution of the first loop and the second loop for a predetermined number of iterations; and
> generate a final image based on values of the state vector and the control vector after completion of the repeating execution of the first loop and the second loop.

12. The system of claim 11, further comprising a control system configured to generate one or more control signals based on the final image.

13. The system of claim 12, wherein the control system is configured to generate one or more actuator control commands based on the one or more control signals.

14. The system of claim 11, wherein the one or more sensors comprise a video camera.

15. The system of claim 11, wherein the one or more sensors comprise an X-ray detector.

16. The system of claim 11, wherein the one or more sensors comprise LiDAR.

17. The system of claim 11, wherein, in executing the first loop, the processor is configured to execute a diffusion model.

18. A non-transitory computer-readable medium storing instructions that, when executed by a computer system, cause the computer system to carry out operations comprising:

> receiving a step size value, a state vector, and, from one or more sensors coupled to the computer system, a measurement value corresponding to an initial image;
> determining a first gradient value and a second gradient value based on the measurement value;
> executing a first loop in a first plurality of steps each having a particular increment size, from a first time value to a last time value, wherein executing the first loop comprises:
>
>> updating the first and second gradient values using values of the state vector; and
>> computing a feedforward gain value and a feedback gain value, using the first and second gradient values, for each of the first plurality of steps; and
>
> executing a second loop in a second plurality of steps each having the step size value, from the last time value to the first time value, wherein executing the second loop comprises:
>
>> re-computing the values of the state vector using the feedforward gain value and feedback gain value computed during execution of the first loop; and
>> generating updated values of a control vector based on the values of the state vector subsequent to the re-computing;

repeating the execution of the first loop and the second loop for a predetermined number of iterations; and generating a final image based on values of the state vector and the control vector after completion of the repeating execution of the first loop and the second loop.

19. The computer-readable medium of claim 18, further comprising instructions that, when executed by the computer system, cause the computer system to:

generate one or more control signals based on the final image; and
generate one or more actuator control commands based on the control signals.

20. The computer-readable medium of claim 18, further comprising instructions to convert raw sensor data from the one or more sensors into the initial image from one or more of the following sensor types:

a video camera;
an X-ray sensor;
a thermal sensor;
a LiDAR sensor.

FIG. 1

FIG. 2

FIG. 3A

Conceptual illustration comparing a probabilistic posterior sampler to our proposed optimal control-based sampler. In a probabilistic sampler, the model relies on an approximation $\check{x}_0 \approx x_0$ to guide each step (left). We are able to compute $x_0$ exactly on each step, resulting in much higher quality gradients $\nabla \log p(\mathbf{y}|\check{\mathbf{x}}_0)$ and an improved trajectory update (right).

FIG. 3B

EP 4 738 244 A1

FIG. 4A

**Inverse problem solution as a function of total diffusion timesteps** $T$ **for the** $4\times$ **super-resolution task.** Compared to DPS (**top row**), our method (**bottom row**) produces solutions that are higher quality, in greater agreement with the inverse problem contraint $Ax = y$, and more stable across $T$.

FIG. 4B

**Robustness to approximation quality of the score function.** We consider the $4\times$ super-resolution task with a *randomly initialized* diffusion model. Since the reverse diffusion process is no longer well approximated, Other cannot produce a feasible solution, while this method still can.

FIG. 4C

22

EP 4 738 244 A1

FIG. 5

23

FIG. 6

FIG. 7

FIG. 8

FIG. 9

## EUROPEAN SEARCH REPORT

**Application Number**

EP 25 21 2022

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Chung Hyungjin ET AL: "Diffusion Posterior Sampling for General Noisy Inverse Problems", , 20 May 2024 (2024-05-20), pages 1-30, XP093347466, DOI: https://doi.org/10.48550/arXiv.2209.14687 Retrieved from the Internet: URL:https://arxiv.org/abs/2209.14687 * page 2 - page 5 * ----- | 1-20 | INV. G06T5/60 |
| A | Li Xiang ET AL: "Decoupled Data Consistency with Diffusion Purification for Image Restoration", arXiv.org, 29 May 2024 (2024-05-29), pages 1-34, XP093347665, DOI: https://doi.org/10.48550/arXiv.2403.06054 Retrieved from the Internet: URL:https://arxiv.org/abs/2403.06054 * page 1 - page 12 * ----- | 1-20 | |
| A | Berner Julius ET AL: "An optimal control perspective on diffusion-based generative modeling", , 16 May 2024 (2024-05-16), pages 1-42, XP093347272, DOI: https://doi.org/10.48550/arXiv.2211.01364 Retrieved from the Internet: URL:https://arxiv.org/pdf/2211.01364 * page 1 - page 10 * ----- | 1-20 | **TECHNICAL FIELDS SEARCHED (IPC)** G06T |

The present search report has been drawn up for all claims

| Place of search | Date of completion of the search | Examiner |
|---|---|---|
| Munich | 9 January 2026 | Üreyen, Soner |

EPO FORM 1503 03.82 (P04C01)